# EUROPEAN PATENT APPLICATION

(11) **EP 4 628 454 A1**
(43) Date of publication of application: **08.10.2025**
(21) Application number: 25167534.4
(22) Date of filing: 31.03.2025
(51) Int. Cl.: C02F 1/32, C02F 1/72, C02F 1/78, C02F 101/32, C02F 101/36, C02F 103/06, C02F 103/00

(54) **REMOVAL OF DIOXANE AND OTHER RECALCITRANT CONTAMINANTS FROM WATER USING NANOBUBBLES IN ADVANCED OXIDATION PROCESSES**

(30) Priority: 01.04.2024 US 202463572600 P
(71) Applicant: StreamGo Water USA LLC, Odessa , FL 33556 (US)
(72) Inventor: POLVERARI, Marco, Saint-Leonard, H1R 3Z4 (CA)
(74) Representative: Huebner, Stefan Rolf

(57) **Abstract**

A method for removing recalcitrant contaminants uses an oxygen-nanobubble advanced oxidation process. Oxygen-nanobubble based advanced oxidation mineralized 1,4 dioxane in an aqueous solution, thereby removing practically all of the 1,4 dioxane. An added advantage is that the process does not form bromate. Also disclosed is an ozone-oxygen nanobubble based advanced oxidation process that removes recalcitrant contaminants. Ozone-oxygen nanobubble based advanced oxidation significantly increased the mass transfer rate compared to that of the micro-bubble technology.

## Description

### REFERENCE TO RELATED APPLICATIONS

This application claims priority to U.S. Provisional Application No. 63/572,600, entitled Removal of Dioxane and Other Contaminants from Water Using Oxygen Nanobubbles in Advanced Oxidation Processes, filed on April 1, 2024, which application is incorporated by reference in its entirety.

### DESCRIPTION

### 1. FIELD OF THE DISCLOSURE

The present disclosure relates to the field of advanced oxidation process technology and environmental protection and, more particularly, relates to the removal of recalcitrant contaminants from aqueous solution by oxygen-nanobubble based advanced oxidation process.

### 2. BACKGROUND

Modern wastewater and drinking water facilities face an array of complex and sometimes contradictory problems. On one hand, they need to treat microorganisms that are becoming increasingly chlorine tolerant while driving down the disinfection byproducts caused by high doses of chlorine. While, on the other hand, they need to treat new recalcitrant contaminants that are emerging, such as pesticides caused by intensive land use, pharmaceutical products consumed in increasing quantities by an aging population, or synthetic organics washing into the aquifer. Non-limiting examples of recalcitrant contaminants are xenobiotic contaminants, surfactants, fluorinated contaminants, inorganic and organic solvents, among others.

Water scarcity will lead to relying more on the reuse of water and has accelerated the urgency to develop and add process barriers to remove these contaminants from the water supply without exacerbating this issue. Few conventional drinking water treatment processes can address these emerging issues and almost no conventional municipal wastewater processes are capable of targeting these problematic contaminants.

Metabolized and un-metabolized Pharmaceutical and Personal Care Products (PPCPs) are not new, however, their potential to cause effects on living tissue is now subject to scrutiny. A study by the U.S. Geological Survey published in 2002 brought attention to PPCPs in water (USGS, 2002). Following sampling of 139 susceptible streams in 30 states, detectable quantities of PPCPs were found in 80 percent of the streams.

Another contaminant of concern is 1,4 Dioxane. A number of consumer products contain 1,4-dioxane as an unwanted byproduct of various chemical reactions that occur during the manufacturing process. In the United States, only two states have established labeling requirements. California listed 1,4-dioxane as a chemical known to cause cancer under the state's Safe Drinking Water and Toxic Enforcement Act of 1986 (commonly referred to as Proposition 65; see https://oehha.ca.gov/proposition-65). Proposition 65 prohibits companies from discharging 1,4-dioxane to sources of drinking water. New York enacted a law that prohibits the sale of personal care and cleaning products with 1,4-dioxane concentrations above 2 ppm after December 31, 2022, and above 1 ppm after December 31, 2023. The law also prohibits the sale of cosmetics with concentrations above 10 ppm after December 31, 2022.

### 3. SUMMARY

The method of the present disclosure may be used to remedy contaminants of emerging concern (CEC) and recalcitrant contaminants in aqueous-related environmental pollution. Because CECs and recalcitrant contaminants are widely distributed with low concentration in the environment, a method is provided from removing CECs and recalcitrant contaminants from a solution using oxygen-nanobubble based advanced oxidation process (AOP).

Various embodiments provide methods for removing CECs and recalcitrant contaminants by mineralization. An exemplary method can include performing an advanced oxidation process (AOP). CECs and recalcitrant contaminants in an aqueous solution or in a mixed water-organic solvent solution can be mineralized by radicals generated by the AOP. Certain embodiments of the present invention include, but are not limited to, the use of pre-or post-polishing using ion exchange resin or activated carbon.

In various embodiments, the CECs and recalcitrant contaminants in the aqueous solution or in the mixed water-organic solvent solution can have a mass concentration ranging from about 10 ng/L to 200 g/L. In various embodiments, the aqueous solution or the mixed water-organic solvent solution can have a pH value ranging from about 3 to about 11. In various embodiments, during the AOP process, the nanobubbles are produced by an apparatus or system where the nanobubbles produced are 400 nm and less, preferably 200 nm and less, most preferably 80 nm and less. In various embodiments the air flow rate is greater than 0.5 SCFH (0.25 LPM).

In various embodiments, the flow rate of the aqueous solution or mixed water-organic solvent solution is greater than 0.5 GPM (1.8 LPM). In various embodiments, the gas flowing through the nano-generator is capable of producing radicals. In various embodiments, the gas flowing through the nano-generator is composed of 1 to 100% oxygen or mixtures of oxygen and ozone. In various embodiments, the aqueous solution or mixed water-organic solvent solution is saturated with nanobubbles.

In various embodiments, the UV wavelength is 400 nm and less, preferably 280 nm and less. In various embodiments, the UV intensity is greater than 50 mJ/cm2. In various embodiments, the hypolimnetic oxidation reduction potential is greater than 0 mV. In various embodiments, the recalcitrant contaminants can include at least one contaminant selected from perfluoroalkyl acids (or their salts) having a number of carbon atoms ranging from about 4 to about 20, and precursors of these perfluoroalkyl acids/salts.

In various embodiments, the recalcitrant contaminants in aqueous-related environmental pollution can include at least one contaminant selected from 1,4-Dioxane, MTBE (methyl tertiary butyl ether), Perchloroethylene (PCE), Pesticides, Trichloroethylene (TCE), VOC's (Volatile Organic Contaminants), benzene, TMAH perfluorooctanoic acid (PFOA), perfluorooctane sulfonic acid (PFOS), perfluorononanoic, acid (PFNA), perfluorodecanoic acid (PFDA), perfluorooctane sulfonyl fluoride (POSF), and fluorotelomer alcohol (8:2 FTOH). In various embodiments, the polyfluoroalkyl contaminant can be selected from polyfluoroalkyl contaminants having a number of carbon atoms ranging from about 4 to about 20. In various embodiments, the polyfluoroalkyl contaminant can include at least one contaminant selected from N-ethyl perfluorooctane sulfonyl fluoride, N-ethyl perfluorooctane sulfonamido acetic acid, and 1H, 1H, 2H, 2H-perfluorooctane sulfonic acid.

Various embodiments further include methods for treating water, e.g., using the disclosed method for removing emerging concern and recalcitrant contaminants by advanced oxidation processes.

Various embodiments include fields of application for food processing, industrial chemicals, metal & metal plating, pesticides, plastic and petrochemical, pharmaceuticals, signature contaminants, textile and dyeing, and toxic contaminants.

The disclosed method for treating water can include a water body of drinking water, surface water, underground water, industrial wastewater, or a combination thereof. According to various embodiments, the disclosed methods have the following advantages:

The process can be simple and easy to operate. Reaction conditions can be mild. Energy consumption can be low. There is no need to add chemicals. Treatment effects can be desirable, stable, and reliable. Industrial application can be easy to implement. Further, the disclosed methods can be applicable to a wide range of concentrations, and can effectively remove recalcitrant contaminants in a solution having a concentration ranging from about 1 ng/L to about 200 g/L, or greater than about 200 g/L.

Thus, treatment speed can be fast. After about 10 seconds of reaction, the removal rate of emerging concern (CEC) and recalcitrant contaminant(s) in the solution can be greater than about 99.9%.

The treatment is sustainable and can be applied at low cost to potable water treatment in geographic locations where reuse is critical and needed.

### 4. BRIEF DESCRIPTION OF THE DRAWINGS

The features of the application can be better understood with reference to the drawings described below. The drawings are not necessarily to scale, emphasis instead generally being placed upon illustrating the principles described herein.
FIG. 1 shows various advanced oxidation processes.
FIG. 2 depicts the nanobubble generating advanced oxidation process system.
FIG. 3 shows the effluent concentration of 1,4-dioxane after an ozone/UV advanced oxidation process treatment in the pilot system.
FIG. 4 shows selected effluent concentrations of 1,4-dioxane after treatment in the pilot system.
FIG. 5 shows the effluent concentration of bromate after treatment in the pilot system.

### 5. DETAILED DESCRIPTION OF THE INVENTION

### 1,4-Dioxane Removal by Advanced Oxidation Processes

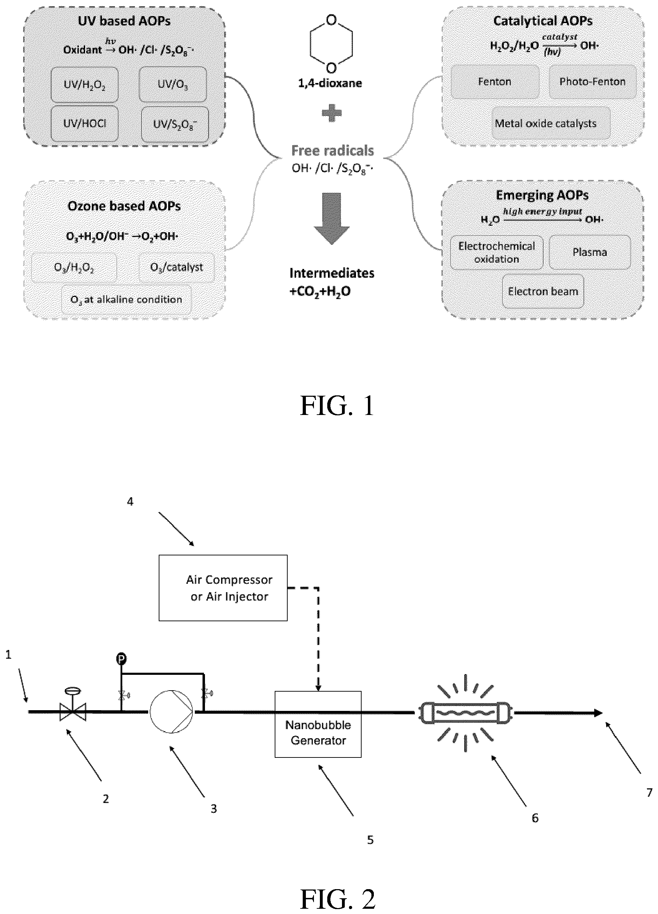

While conventional oxidation process (i.e., ozone or chlorine) has been proven to be ineffective in 1,4-dioxane degradation, advanced oxidation processes (AOPs) have been demonstrated to be a feasible and effective option to degrade 1,4-dioxane completely. AOPs are composed of two main steps: (i) in-situ generation of highly oxidative radicals (e.g., hydroxyl radicals (OH) and sulfate radicals (S208)); and (ii) the reaction of the oxidative radicals with targeted contaminants. AOPs come in different configurations based on different methods of activation and generation of free radicals, and the OH radical is one of the commonly used radical species (Figure 1).

Current available OH-utilizing AOPs for the treatment of 1,4-dioxane include the use of UV-based AOPs such as ultraviolet radiation (UV) coupled with peroxide (H2O2) (UV/H2O2) and UV coupled with ozone (O3) (UV/ O3); ozone-based AOPs such as O3/H2O2; catalytic AOPs such as Fenton process (Fe2+/H2O2) and photo-Fenton process. AOPs are often favored for the treatment of 1,4-dioxane-contaminated water due to the short exposure timeline (typically several seconds to a few hours) and high removal efficiency (>90%). Among different AOP configurations, a UV/ H2O2 system has been widely used for the treatment of 1,4-dioxane-contaminated water from bench to full scale. However, a high concentration of oxidants (e.g., 8-10 mg/L of H2O2) is often required to generate sufficient free radicals to achieve complete degradation of 1,4-dioxane. Therefore, a subsequent step such as granular activated carbon is required to consume the residual oxidant as well as the AOP byproducts.

Ozone-based AOP processes such as O3/UV, O3/ H2O2, O3/ H2O2/UV, O3/Fe (II), O3/metal oxide catalyst, O3/activated carbon, O3/ultrasound, O3/Fenton and photocatalytic ozonation are examples of ozone based AOP. UV based AOP rely solely on H2O2/UV. UV and Ozone-based AOPs have been proved to be effective at remediating a wide range of industrial effluents containing recalcitrant contaminants. However, each and its advantages and disadvantages. These are listed in Table 1 and Table 2 for UV-based advanced oxidation processes and ozone-based advanced oxidation processes, respectively.

**Table 1: UV-based Advanced Oxidation Processes**

| Advantages | Disadvantages |
|---|---|
| Breaks down both CVOCs and 1,4-D. | Requires higher water quality or pretreatment. |
| No potential bromate formation in waters with bromide. | |
| | Requires high UVT. |
| Capable of continuous treatment at various flow rates. | High electrical usage. |
| | Affected by UV absorbers in water (Nitrate, BOD) requiring higher levels of UV. |
| | Humic and fulvic acid coat UV sleeves, reducing UV power. |
| | Iron in water decomposes peroxide. |
| | Very large footprint. |
| | High H2O2 dosages |
| | Granular activated carbon may be required to remove excess H2O2 |

**Table 2: Ozone based Advanced Oxidation Processes**

| Advantages | Disadvantages |
|---|---|
| Breaks down both CVOCs and 1,4-D. Less sensitive to poor water quality. | Potential bromate production in waters with bromide. |
| Lower power consumption compared to UV-based technologies. | Requires concentrated O₂ production (>98%). |
| Capable of continuous treatment at various flow rates. | |
| Not affected by water chemistry (Fe, UV absorbers, humic acid). | |
| No excess H₂O₂ | |

As seen in Tables 1 and 2, existing AOP technologies for contaminant remediation need to be improved. Any new and appropriate technology should consider AOP treatment performance, compliance with drinking water regulations, capital and life-cycle cost estimates, ease of operations and maintenance, constructability, footprint, reliability, sustainability, compatibility with overall the water treatment process and ancillary systems, chemical consumption, power usage and residuals. Based on these criteria, the UV/H2O2 process was selected for full-scale implementation. Table 3 lists the desired attributes of a new system.

**Table 3: Attributes of new Advanced Oxidation Processes technology**

| Attributes |
|---|
| Breaks down both CVOCs and 1,4-D. |
| No potential bromate formation in waters with bromide. |
| Capable of continuous treatment at various flow rates. |
| Less sensitive to poor water quality. |
| Lower power consumption compared to UV-based or ozone-based technologies. |
| Not affected by water chemistry (Fe, UV absorbers, humic acid). |
| Does not require higher water quality or pretreatment. |
| Does not require high UVT. |
| Not affected by UV absorbers in water (Nitrate, biological oxygen demand) requiring higher levels of UV. |
| Not affected by humic and fulvic acid on UV sleeves, reducing UV power. |
| Not affected by iron in water. |
| Smaller large footprint. |
| Compliance with drinking water regulations |
| Low capital and life-cycle cost |
| Ease of operation and maintenance |
| Sustainability |
| Compatibility with overall water treatment process and ancillary systems |
| Low chemical consumption |
| No H2O2 dosing |

Disclosed is a method to treat aqueous contaminants using AOP hydroxyls produced using oxygen or a mixture of oxygen-ozone nanobubbles, combined with UV. If oxygen rich nanobubbles smaller than 400 nm in diameter are irradiated, the resulting reaction forms hydroxyls capable of reacting with contaminants of emerging concern and recalcitrant contaminants. Larger bubbles would not undergo such a reaction. Most importantly, oxygen nanobubbles were shown to be capable of creating oxidative species in very much the same manner as ozone without the requirement of an ozonator.

The contaminants in water are removed via radicals produced by irradiating nanobubbles with UV. The resulting reaction was found to increase the hypolimnetic oxidation reduction potential to over +300 mV from an initial value of -200 mV (reductive conditions), clearly indicating oxidation.

The nanobubbles are produced with a nanobubble generator which was found to produce bubbles with a nominal size distribution of 80-200 nm. Nanobubbles are characterized by the fact that they are not visible to the naked eye and do not rise to the top but linger in solution acting like solid Brownian particles. Nanobubble diameters are typically less than 800 nm, but most scientists categorize nanobubbles as having a diameter of less than 200 nanometers (nm). When irradiated with UV, the oxygen rich nanobubbles produce the same hydroxyl radicals produced by ozone or peroxide reaction with UV (AOP).

Therefore, using such a technology, contaminants in a solution can be removed at a much lower cost as ozone production is not required and power usage is low. Peroxide is not needed as the hydroxyl radical is formed from the microbubble UV irradiation. Most importantly, the technology fulfills the requirements listed in Table 3 to reduce the cost of subsequent treatment of the contaminated solution and improve the efficiency of the treatment.

A nanobubble based advanced oxidation process can be used to cause recalcitrant contaminants in a solution to be mineralized and removed. A mechanism using advanced oxidation processes to remove recalcitrant contaminants in a solution can include the following:

A gas rich in oxygen, or any oxidizable gas able to produce radicals, is flowed through a nanobubble generating device to create nanobubbles which are injected into the aqueous or mixed water-solvent solution. The solution is then sent through a UV system which irradiates the aqueous solution containing the nanobubbles rich in oxygen and the recalcitrant contaminants. The nanobubbles, due to their chemical and physical properties, produce through an in-situ process highly reactive hydroxyl radicals (·OH). These reactive species are the strongest oxidants that can be applied in water and can virtually oxidize any contaminant present in the water matrix, often at a diffusion-controlled reaction speed. Consequently, ·OH reacts unselectively once formed and contaminants will be quickly and efficiently fragmented and converted into small inorganic molecules. As shown in FIG. 2, the influent (1) containing contaminants flows into the system. A shut off valve (2) may stop the inflow. A pump (3) causes the influent to flow to the nanobubble generator (5). The air compressor or air injector (4) sends air through the nanobubble generator (5) to create the nanobubbles which are injected into the influent, which is an aqueous or mixed water-solvent solution. The solution then flows through the UV system (6), which irradiates the solution containing the oxygen-rich nanobubbles. The resulting highly reactive hydroxyl radicals (·OH) oxidize the contaminants.

Unlike other AOP methods, hydroxyl radicals can be produced with UV and oxygen nanobubbles only. In one embodiment, the method does not make use of one or more primary oxidants (e.g. ozone, hydrogen peroxide) and/or catalysts (e.g. titanium dioxide) which other AOP methods utilize. As a result, there is no need to add chemicals or utilize ozone generators. Treatment effects can be desirable, stable, reliable and sustainable. Industrial application can be easy to implement. Further, the disclosed methods can be applicable to a wide range of concentrations and can effectively remove recalcitrant contaminants. One embodiment of the method can reduce the concentration of contaminants from several-hundreds of ppm to less than 5 ppb and therefore significantly lower chemical oxygen demand and total organic carbon. Most importantly, since no ozone generators or additional chemicals are required, there are large economic savings in terms of energy (electricity), equipment (pumps, feed systems, electronics), footprint (less buildings), maintenance, operation, and safety (no toxic chemicals or gases).

It was found that only if nanobubbles smaller than 400 nm in diameter are irradiated, the resulting reaction forms hydroxyls capable of reacting with CEC and recalcitrant contaminants. Larger bubbles would not undergo such a reaction. The removal of recalcitrant contaminants using oxygen containing nanobubbles combined with UV was found to be highly effective and allowed for total removal of recalcitrant contaminants.

Radical hydroxyls are formed from the oxygen rich nanobubbles following the current reactions. Water molecules decompose into hydroxyl and hydrogen radicals upon UV irradiation. The hydrogen radical further reacts with the oxygen within the nanobubble to form a further hydroxyl radical and oxonium atom, which the reacts with a hydroxyl radical to form a hydroperoxyl.

H2O → •H + •OH [1]

• H + O2 → •OH + O [2]

O + •OH → •OOH [3]

The hydroxyl and hydroperoxyl radicals react with the contaminants and break down the contaminants to CO2, H2O and intermediates as shown in Figure 1.

The type of recalcitrant contaminants the disclosed methods may treat is not specifically limited in the present disclosure. The recalcitrant contaminants can include one or more contaminants selected from perfluoroalkyl acids having a number of carbon atoms ranging from about 4 to about 20, perfluoroalkyl acid salts having a number of carbon atoms ranging from about 4 to about 20, and the precursors thereof.

The recalcitrant contaminants in aqueous-related environmental pollution can include at least one contaminant selected from 1,4-Dioxane, MTBE (methyl tertiary butyl ether), Perchloroethylene (PCE), Pesticides, Trichloroethylene (TCE), VOC's (Volatile Organic Contaminants), benzene, TMAH, perfluoroalkyl acids having a number of carbon atoms ranging from about 4 to about 20, perfluoroalkyl acid salts having a number of carbon atoms ranging from about 4 to about 20, and the precursors thereof. Examples of these compounds include perfluorooctanoic acid (PFOA), perfluorooctane sulfonic acid (PFOS), perfluorononanoic, acid (PFNA), perfluorodecanoic acid (PFDA), perfluorooctane sulfonyl fluoride (POSF), and fluorotelomer alcohol (8:2 FTOH).

The type of materials or system used to produce nanobubbles is not limited in the present disclosure. Any type of system or materials that produces nanobubbles of sizes between 80 and 200 nm can be used. Optionally, the system to produce nanobubbles can be selected from, but not limited to, sonification, cavitation, pressure release, pressured membranes, non-pressurized membrane, and entrained air nano bubble generators. For systems with air injection, the air flow rate may be greater than 0.5 SCFH (0.25 LPM). The flow rate of the aqueous solution or mixed water-organic solvent solution may be greater than 0.5 GPM (1.8 LPM).

The gas flowing through the nanogenerator is composed of 1 to 100% pure oxygen. In various embodiments the aqueous solution or mixed water-organic solvent solution may be saturated with nanobubbles.

The aqueous solution or the mixed water-organic solvent solution may have a pH value ranging from about 3 to about 11.

The UV wavelength may be 400 nm or less, preferably 280 nm or less. The UV intensity is greater than 50 mJ/cm2.

The hypolimnetic oxidation reduction potential may be greater than 0 mV.

The pilot study below demonstrated that the oxygen-nanobubble based advanced oxidation method can effectively remove recalcitrant contaminants in aqueous-related environmental pollution that have different concentrations in solutions. After less than 2 minutes of reaction, the removal rates of 1,4 Dioxane are 100.0%.

A second study demonstrated that an oxygen/ozone based advanced oxidation system can effectively recalcitrant contaminants in aqueous-related environmental pollution. The nanobubbles increased the acetaminophen degradation rate compared to that of macro bubbles.

### 6. PILOT STUDY

### A. Treatment of Dioxane using Oxygen Nanobubbles

### Pilot Study Objectives

The objective of the pilot study was to demonstrate effective treatment of 1,4-dioxane present in the various groundwater sources feeding a potable water plant. The NY State Department of Health has established a Maximum Contaminant Level (MCL) for 1,4-dioxane of 1.0 µg/L while the objective of this pilot was to treat the water under study to non-detectable levels. The method used for testing was EPA 522 with a minimum quantification level (MQL) of 0.04 µg/L and a minimum detection level (MDL) of 0.02 µg/L.

Additionally, the pilot system was required to not form any additional harmful byproducts as part of the treatment process. Bromate was identified as a byproduct of concern in initial rounds of testing. The NY State Department of Health has established a MCL for bromate of 10 µg/L. The method used for analysis was EPA 300.1 with a MQL of 5 µg/L.

### Pilot System Setup

The oxygen-nanobubble based advanced oxidation system uses a combination of oxygen and UV light irradiation to achieve destruction of microcontaminants including 1,4-dioxane. Nanobubbles were produced using an on-site, in-line nano-generator injected with 98% oxygen.

Testing was conducted on a single well source.

### Test Results

Sample analysis was conducted by an independent third party.

**Table 4: Influent raw water 1,4 dioxane and bromide concentrations from selected test runs.**

| **Run** | **1,4-dioxane (µg/L)** | **Bromide (ug/L)** |
|---|---|---|
| C1 | 6.3 | 112 |
| C10 | 4.3 | 137 |

In Table 5, the dose conditions for UV dose and oxygen nanobubbles are shown.

**Table 5: Summary of Run Conditions for test runs.**

| **Run** | **UV Dose (mJ/cm2)** | **Nanobubble Oxygen Dose (ppm)** |
|---|---|---|
| C1 | 300 | 0.5 |
| C2 | 500 | 0.5 |
| C3 | 300 | 0.5 |
| C4 | 500 | 0.5 |
| C5 | 300 | 0.8 |
| C6 | 500 | 0.8 |
| C7 | 300 | 1.0 |
| C8 | 500 | 1.0 |
| C9 | 300 | 1.0* |
| C10 | 500 | 1.0* |

| | | |
|---|---|---|
| Note: (*) oxygen injected using venturi tube producing microbubbles | | |

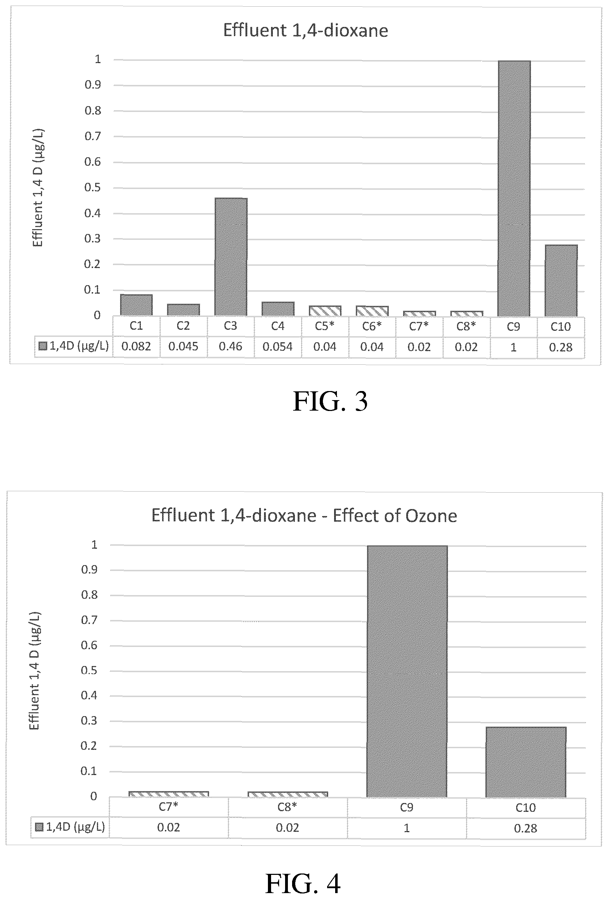

Effluent testing was conducted on all samples after undergoing treatment. Effluent concentrations of 1,4-dioxane are shown in Figure 3. Results shown with a diagonal dash-line are below minimum quantification level. Samples C1-C8 are nanobubble dosed. Samples C9 and C10 are not nanobubble dosed (venturi injected air). The asterisk denotes values below the minimum quantification level for EPA 522.

Samples C1, C2, and C4 show effective treatment near the minimum quantification level (MQL) while still showing slight quantifiable concentrations of 1,4-dioxane. Samples C5, C6, C7, and C8 show complete treatment of 1,4-dioxane to below minimum quantification level (MQL). Samples C9 and C10 (no nanobubbles dosed) show ineffective treatment indicating that nanobubbles are necessary to support the reaction conditions that are targeted in this study.

Figure 4 shows selected effluent concentrations of 1,4-dioxane after treatment in the pilot system. An asterisk denotes values below the minimum quantification level for EPA 522. Samples C7 and C8 have undergone nanobubble dosing while C9 and C10 have no nanobubbles dosed. Figure 4 highlights the effect of nanobubbles dosing with selected data from Figure 1. All samples shown here have identical total oxygen levels but only C7 and C8 have oxygen present as nanobubbles.

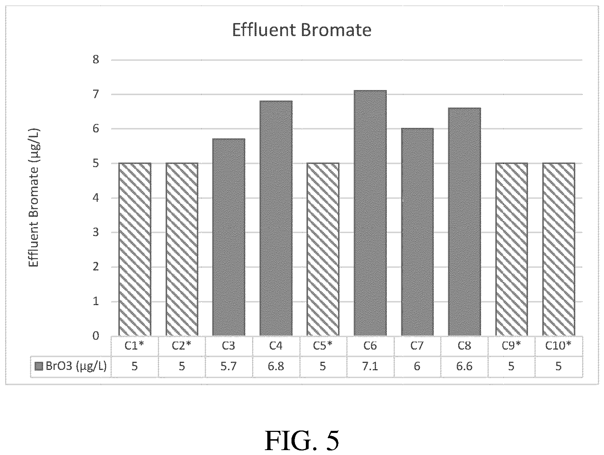

Figure 5 shows the effluent concentration of bromate after treatment in the pilot system. Samples C1-C8 are nanobubble dosed. Samples C9 and C10 are not nanobubble dosed (venturi injected air). An asterisk denotes values below minimum quantification level for EPA 300.1. Byproduct formation of bromate was also tested in all effluent samples. No incoming bromate was found in influent samples. Effluent concentrations of bromate after the oxygen-nanobubble based advanced oxidation treatment are shown in Figure 4. Results shown with a diagonal dash-line are below minimum quantification level.

In Figure 5, all operating conditions led to effluent bromate concentrations below the NY state Maximum Contaminant Level (MCL) while test rounds C1, C2, C5, C9, and C10 show effluent bromate below with Minimum Quantification Level (MQL) for EPA 300.1. Increased bromate formation (C3, C4, C5, C7) was seen at higher UV doses indicating that UV irradiation may favor bromate formation.

The process utilizes nanobubble generation with and UV synergistically to effective removal. Therefore, an effect of enhanced removal can be achieved. Thus, the treatment speed can be fast. After about 30 seconds of reaction, the removal rate of the recalcitrant contaminants in the solution can be greater than about 99.9%.

B. Treatment of PPCPs using Oxygen-Ozone Nanobubbles compared to Oxygen-Ozone Microbubbles.

The objective of a second pilot study was to demonstrate effective treatment of a common PCPP (Pharmaceutical and Personal Care Product) paracetamol or acetaminophen, which is a non-opioid analgesic and antipyretic agent. The second pilot study was set up in a similar manner as the first pilot study. The results are shown in Table 6.

**Table 6: Effluent concentration of acetaminophen after treatment in the pilot system. Samples 1a-4a are nanobubble dosed. Samples 1b-4b are not nanobubble dosed (venturi injected air).**

| Nanobubble Injection (nominal size : 90-160 nm) | | | | | Microbubble Injection (nominal size : 1450-1900 nm) | | | | |
|---|---|---|---|---|---|---|---|---|---|
| Run no. | Oxygen (ppm) | Ozone (ppm) | Concentration (ppt) | Removal (%) | Run no. | Oxygen (ppm) | Ozone (ppm) | Concentration (ppt) | Removal (%) |
| 1a | 0 | 0 | 122 | 0 | 1b | 0 | 0 | 122 | 0 |
| 2a | 0 | 5 | 1.0 | 99.2 | 2b | 0 | 5 | 15.7 | 87.1 |
| 3a | 2.5 | 2.5 | 13.3 | 89.1 | 3b | 2.5 | 2.5 | 71.9 | 41.1 |
| 4a | 5 | 0 | 37.0 | 69.7 | 4b | 5 | 0 | 120.8 | 1 |
| UV Dose: 500 mJ/cm2 | | | HRT: 0.5 min | | | | | | |

The data in Table 6 indicate that the nanobubble advanced oxidation process technology significantly increased the mass transfer rate compared to that of the micro-bubble technology. The half-life of nanobubbles was 15-30 times longer than that of the microbubbles. Due to the high mass transfer rate and its durability, the nanobubbles significantly increased the acetaminophen degradation rate compared to that of the macro-bubbles within the AOP process. The addition of nanobubbles significantly increased the acetaminophen degradation rate constant by OH radical production during the nanobubbles/UV process. The data also show that oxygen/ozone nanobubble advanced oxidation process treatment is as efficient as ozone micro-bubble treatment. The use of oxygen allowed a reduction in the use of ozone, which is less expensive and energy intensive.

In the disclosed methods, a simple nanobubble generator can be used. Thus, the process can be simple and easy to operate. Reaction conditions can be mild. Energy consumption can be low. Treatment effect can be desirable, stable, and reliable. Industrial application can be easy to implement. In addition, the removal technology used for the harmless treatment of the contaminants does not need to use chemicals or gases.

## Claims

1. A method for removing recalcitrant contaminants in aqueous-related environmental pollution comprising:
performing a nanobubble generation to generate nanobubbles; injecting said nanobubbles into an aqueous solution and/or into a mixed water-organic solvent solution, wherein the nanobubbles are generated with a gas comprising 1 to 100% oxygen; and irradiating the aqueous solution or mixed water-organic solvent solution to mineralize the recalcitrant contaminants into smaller molecules.

2. A method for removing recalcitrant contaminants in aqueous-related environmental pollution comprising:
performing a nanobubble generation to generate nanobubbles; injecting said nanobubbles in an aqueous solution or/and into a mixed water-organic solvent solution, wherein the nanobubbles are generated by a gas comprising ozone and oxygen; and irradiating the aqueous solution or mixed water-organic solvent solution to mineralize the recalcitrant contaminants into smaller molecules.

3. The method according to claim 1 or claim 2, wherein the recalcitrant contaminants in the aqueous solution or in the mixed water-organic solvent solution have a mass concentration ranging from about 1 ng/L to about 200 g/L, and/or
wherein the nanobubbles are generated by sonification, cavitation, pressure release, pressured membranes, non-pressurized membranes, or entrained air nano-bubble generators.

4. The method according to claim 1 or claim 2, wherein the nanobubbles have sizes of less than 400 nm.

5. The method according to claim 1 or claim 2, wherein the nanobubbles have sizes of between 80 and 200 nm.

6. The method according to claim 1, wherein the gas comprises at least one oxidizing gas and oxygen.

7. The method according to claim 1 or claim 2, wherein the saturation of the solution with nanobubbles is greater than 1%.

8. The method according to claim 3, wherein the air flow rate for the nanobubble generator is at least 0.5 SCFH (0.25 LPM).

9. The method according to claim 3, wherein the flow rate of the aqueous solution or mixed water-organic solvent solution through the nanobubble generator is at least 0.5 GPM (1.9 LPM).

10. The method according to claim 1 or claim 2, wherein the irradiation comprises a UV wavelength between 50 and 400 nm.

11. The method according to claim 1 or claim 2, wherein the irradiation comprises a UV wavelength of less than 280 nm.

12. The method according to claim 1 or claim 2, wherein the irradiation provides a UV dose greater than 50 mJ/cm2.

13. The method according to claim 1 or claim 2, wherein the recalcitrant contaminants include at least one contaminant selected from the group consisting of 1,4-dioxane, methyl tertiary butyl ether, perchloroethylene (PCE), pesticides, trichloroethylene, volatile organic contaminants (VOCs), benzene, TMAH, perfluorooctanoic acid (PFOA), perfluorooctane sulfonic acid (PFOS), perfluorononanoic, acid (PFNA), perfluorodecanoic acid (PFDA), perfluorooctane sulfonyl fluoride (POSF), and fluorotelomer alcohol (8:2 FTOH).

14. The method according to claim 1 or claim 2, wherein the aqueous solution comprises water.

15. The method according to claim 1 wherein the gas is 100% oxygen.
